# EUROPÄISCHE PATENTANMELDUNG

(11) **EP 0 911 198 A1**
(43) Veröffentlichungstag der Anmeldung: **28.04.1999**
(21) Anmeldenummer: 97810785.2
(22) Anmeldetag: 22.10.1997
(51) Int. Cl.: B60J 5/06, E05F 15/14

(54) **Schwenkschiebetür**

(71) Anmelder: FBT Fahrzeug- und Maschinenbau AG, 3367 Thörigen (CH)
(72) Erfinder: Quaile, Markus, Masch.Ing. HTL, 4922 Bützberg/BE (CH)
(74) Vertreter: Roshardt, Werner Alfred, Dipl.-Phys.

(57) **Zusammenfassung**

Eine Schwenkschiebetür insbesondere für Fahrzeuge weist ein Türblatt (80; 90) auf, das mittels Verbindungsmitteln mit einem Mutterglied (20; 30) drehfest verbunden ist. Das Mutterglied (20; 30) ist nach Art eines Spindel-Mutter-Triebes durch eine Spindel (10) im wesentlichen horizontal entlang der die Türöffnung aufweisenden Fahrzeugwand verschiebbar. Die Spindel (10) ist durch Antriebsmittel (60, 64) zur Drehung antreibbar, die eine Selbsthemmung aufweisen, derart dass eine sichere Verriegelung der Tür in geschlossener Stellung gewährleistet ist. Die erfindungsgemässe Schwenkschiebetür ist im Vergleich zu bisher bekannten Schwenkschiebetüren sehr wartungsfreundlich und zeichnet sich durch eine kompakte Bauweise aus, da sie weder hydraulische noch pneumatische Antriebsmittel aufweist und keinerlei aufwendige Zusatzvorrichtungen zur Verriegelung der Tür oder für die Notöffnung der Tür benötigt.

## Beschreibung

### Stand der Technik

Eine Schwenkschiebetür der eingangs genannten Art ist beispielsweise aus DE 36 30 229 A1 (Kiekert GmbH) bekannt. Diese Druckschritt stellt eine zweiflüglige Tür dar, bei der jedes Blatt durch mindestens zwei an einem Türbaum befestigte Rollenhebel geführt wird, welche mit einer Rolle je in eine Führungsschiene am Türblatt eingreifen. Zur Betätigung der Tür ist für jedes Türblatt eine Zylinderkolbenanordnung vorgesehen, welche zum Öffnen das Türblatt zunächst über ein Hebelgestänge im wesentlichen quer zur Fahrzeuglängsrichtung ausschwenkt und anschliessend mittels einer Schienen-Rollen-Führung in Fahrzeuglängsrichtung zur Seite verschiebt.

Da die elektrisch angetriebene Zylinderkolbenanordnung nur während des Öffnens oder Schliessens der Tür unter Strom stehen kann, ist zur Verriegelung der Tür ein Totpunktmechanismus notwendig, der gewährleistet, dass ein Manipulieren an der geschlossenen Tür nicht zu deren unbeabsichtigtem Öffnen führen kann. Dieser Totpunktmechanismus muss beim Einbau der Tür und anschliessend in regelmässigen Wartungsintervallen genau justiert werden, was im rauhen und mit grossen auftretenden Temperaturunterschieden verbundenen Betrieb von Fahrzeugen schwierig und aufwendig ist.

In DE 43 34 403 A1(IFE Industrie-Einrichtungen) wird eine Schwenkschiebetür für Fahrzeuge beschrieben, bei der zumindest ein Türblatt mittels eines Schlittens an einer Schiene axial verschieblich und um die Schiene verschwenkbar aufgehängt und durch Türführungen geführt ist. Der Schlitten wird durch eine im wesentlichen parallel zur Schiene angeordnete Spindel eines Spindel-Mutter-Triebes angetrieben. Auf einer Seite wird die Spindel durch einen Elektromotor angetrieben, auf der gegenüberliegenden Seite ist sie über einen Freilauf mit einer Aufnahme verbunden, die durch eine Bremse wahlweise drehfest oder drehbar gelagert ist. Der Freilauf gestattet die Verdrehung der Spindel in der Richtung, die der Schliessbewegung der Türe entspricht und verhindert durch die Blockierung der umgekehrten Drehrichtung eine unbeabsichtigte Öffnung der Tür. Zum Öffnen der Tür muss die Bremse der Aufnahme gelöst werden, damit die Spindel in die Gegenrichtung gedreht werden kann.

Die Schwenkschiebetür gemäss dieser Druckschrift erfordert eine aufwendige und relativ grossräumige Konstruktion im Deckenbereich über der Tür. Die dafür notwendigen Raumverhältnisse sind - wenn überhaupt - meistens nur bei Eisenbahnwagen, nicht aber bei Strassenfahrzeugen vorhanden.

Um die gestiegenen Sicherheitsanforderungen an heutige Personenbeförderungseinrichtungen zu erfüllen, muss eine zeitgemässe Schwenkschiebetür einerseits eine sichere Verriegelung der Tür während der Fahrt und andrerseits eine zuverlässige Möglichkeit zur Entriegelung der Tür in Notfällen gewährleisten. Weiter ist ein möglichst rascher Öffnungs- und Schliessvorgang erwünscht, um zum Beispiel bei Omnibussen die Wartezeit bei Haltestationen nicht unnötig zu verlängern. Eine solche Schwenkschiebetür sollte zudem mitsamt ihrem Betätigungsmechanismus eine möglichst kompakte und raumsparende Konstruktion aufweisen, damit sie auch in bestehende Fahrzeuge einbaubar ist, ohne dass deren Karosserie, insbesondere im Bereich des Dachrahmens, wesentlich verändert werden muss. Weiter ist aus Kostengründen eine möglichst einfache und wartungsfreundliche Konstruktion einer solchen Schwenkschiebetür erwünscht.

Bisher bekannte Schwenkschiebetüren vermögen diese zum Teil gegensätzlichen Anforderungen nicht in einem befriedigenden Ausmass zu erfüllen.

### Darstellung der Erfindung

Aufgabe der vorliegenden Erfindung ist die Bereitstellung einer Schwenkschiebetür der eingangs genannten Art, welche die an heutige Personenbeförderungseinrichtungen gestellten Sicherheitsanforderungen erfüllt und eine einfache und zugleich raumsparende Konstruktion aufweist.

Eine erfindungsgemässe Schwenkschiebetür der eingangs genannten Art zeichnet sich dadurch aus, dass sie ein Türblatt aufweist, das mittels Verbindungsmitteln mit einem Mutterglied drehfest verbunden ist. Das Mutterglied ist nach Art eines Spindel-MutterTriebes durch eine Spindel im wesentlichen horizontal entlang der Fahrzeugwand verschiebbar, welche die Türöffnung aufweist. Die Spindel ist durch Antriebsmittel zur Drehung antreibbar, die eine Selbsthemmung aufweisen. Durch diese Selbsthemmung wird eine sichere Verriegelung der Tür in irgend einer beliebig wählbaren Stellung, insbesondere in geschlossener Stellung, gewährleistet, sobald der Spindelantrieb ausgeschaltet ist. Selbsthemmende Antriebsmittel sind als Antriebsmittel definiert, die eine Bewegungs- und/oder Kraftübertragung nur in eine Richtung zulassen (von einem antreibenden Element zu einem angetriebenen Element), in die Gegenrichtung jedoch blockieren. Eine Schwenkschiebetür gemäss der Erfindung kann einflüglig, zweiflüglig oder mehrflüglig ausgeführt sein.

Vorzugsweise weisen die Spindelantriebsmittel einen Elektromotor auf und ein Schneckengetriebe, über welches die Spindel durch den Elektromotor zur Drehung antreibbar ist. Die für die Türverriegelung erforderliche Selbsthemmung des Spindelantriebes wird dann durch die bei Schneckengetrieben systembedingt gegebene Selbsthemmung geliefert. Als Alternative können jedoch auch andere Antriebsmittel mit Selbsthemmung verwendet werden, wie z.B. ein selbsthemmendes Planetengetriebe, ein mit einem Freilauf gekoppeltes Getriebe usw.

Bei einer Schwenkschiebetür mit Spindelantrieb kann zur Entriegelung der Tür in Notfällen eine mittels einer Notbetätigungsvorrichtung lösbare Kupplungsvorrichtung zwischen der Spindel und den Antriebsmitteln vorgesehen sein und das Spindelgewinde einen Steigungswinkel aufweisen, der ein zum Öffnen der Tür von Hand erforderliches Verschieben des mit dem Türblatt verbundenen Muttergliedes auf der von den Antriebsmitteln entkuppelten Spindel ermöglicht. Dadurch kann in Notfällen die Tür geöffnet werden, indem zunächst durch Betätigung der Notbetätigungsvorrichtung die Spindel von den Antriebsmitteln entkuppelt und somit die Tür entriegelt wird, und anschliessend das entriegelte Türblatt von Hand zur Seite geschoben wird. Es leuchtet ein, dass dieser Aspekt der Erfindung nicht zwingend im Zusammenhang mit den Antriebsmitteln mit Selbsthemmung eingesetzt werden muss.

Die lösbare Kupplungsvorrichtung weist vorzugsweise eine Bogenzahnkupplung auf, die ein eine Innenverzahnung aufweisendes Taschenteil hat und ein Nabenteil einer Aussenverzahnung, welche mit der Innenverzahnung des Taschenteils zusammenwirkt. Eines der Teile des aus dem Taschenteil und dem Nabenteil bestehenden Teilepaares ist drehfest mit der Spindel verbunden, das andere Teil des Teilepaares ist drehfest mit den Antriebsmitteln verbunden. Die Wirkverbindung zwischen dem Taschenteil und dem Nabenteil kann durch Betätigung der Notbetätigungsvorrichtung gelöst werden.

Anstelle einer Bogenzahnkupplung kann auch eine andere geeignete Kupplung (z.B. eine Scheibenkupplung) verwendet werden, durch welche im Notfall die Wirkverbindung zwischen der Spindel und den Antriebsmitteln gelöst werden kann.

Der Steigungswinkel des Spindelgewindes ist bei einer bevorzugten Ausführungsform der Erfindung grösser als 45 Grad. Vorzugsweise ist dieser Steigungswinkel sogar grösser als 60 Grad, um ein besonders leichtes Verschieben des mit dem Türblatt verbundenen Muttergliedes auf der von den Antriebsmitteln entkuppelten Spindel zu ermöglichen.

Bei einer weiteren bevorzugten Ausführungsform der Erfindung weist die Schwenkschiebetür zur Erleichterung des Öffnens der Tür von Hand in Notfällen eine Hilfsöffnungsvorrichtung auf, welche nach Betätigung der Notbetätigungsvorrichtung die Tür selbsttätig mittels Federkraft zumindest soweit öffnet, dass das Türblatt anschliessend von Hand um eine seitliche Türblattkante herum greifbar ist.

Bei einer erfindungsgemässen Schwenkschiebetür können die Verbindungsmittel zur Führung des Türblattes quer zur Fahrzeugwand einen Hebel umfassen, der mit einer Führungsrolle in eine mit dem Fahrzeugrahmen fest verbundene, im wesentlichen gerade Führungsschiene eingreift, um die Querbewegung des Türblattes mit seiner Längsbewegung zu koppeln. Der Führungshebel und die Führungsschiene sind vorzugsweise derart angeordnet, dass die Kopplung von Längs- und Querbewegung im wesentlichen während des gesamten Bewegungsablaufs beim Öffnen bzw. beim Schliessen der Tür erfolgt. Damit wird ein abrupter, ruckartiger Übergang von einer Schwenkbewegung des Türblattes im wesentlichen quer zur Fahrzeugwand zu einer Verschiebungsbewegung im wesentlichen längs zur Fahrzeugwand vermieden, weil die Längsbewegung und die Querbewegung des Türblattes im wesentlichen gleichzeitig ausgeführt werden. Dieser Aspekt der Erfindung kann unabhängig vom Spindelantrieb für Schwenkschiebetüren eingesetzt werden.

Bei einer weiteren Ausführungsform der Erfindung kann die Schwenkschiebetür zusätzlich eine Verriegelungsvorrchtung mit einem Hubmagnet zur zusätzlichen Verriegelung der Tür aufweisen.

Vorteilhafterweise weist eine erfindungsgemässe Schwenkschiebetür zur Führung des Türblattes weiter zwei Schwenkbügel auf, die an einem um eine vertikale Achse drehbar am Fahrzeugrahmen gelagerten Türbaum angebracht sind. An den beiden Bügeln, von denen vorzugsweise einer oben und der andere unten am Türbaum angebracht ist, ist je eine Kugelhülse gelenkig angeordnet. Jede dieser Kugelbüchsen wirkt mit je einer auf entsprechender Höhe im wesentlichen horizontal am Türblatt befestigten Welle zusammen, indem sie nach Art einer Längsführung auf der Welle geführt wird. Durch die zwei Längsführungen aus Welle und Kugelhülse und die Verbindungsmittel zwischen Türblatt und Mutterglied wird das Türblatt an insgesamt drei Punkten geführt.

Anstelle der aus Kugelhülse und Welle bestehenden Längsführungen können auch andere geeignete Längsführungen (z.B. Schienen-Rollen-Führungen) verwendet werden, um das Türblatt während des Öffnens und Schliessens der Tür zu führen und in offener bzw. geschlossener Stellung zu halten. Zudem können zur Erhöhung der Stabilität des Türblattes auch mehr als zwei Längsführungen vorgesehen sein.

Bei einer weiteren bevorzugten Ausführungsform der Erfindung weist die Schwenkschiebetür zwei Türblätter auf. Die beiden Türblätter werden durch eine einzige Spindel angetrieben, deren Gewindegänge auf beiden Spindelhälften gegenläufig ausgebildet sind, um die mit den Türblättern verbundenen Mutterglieder je entlang einer Spindelhälfte in entgegengesetzten Richtungen zu bewegen. Vorzugsweise ist bei dieser Ausführungsform der Erfindung die Spindel sowohl an beiden Spindelenden als auch in der Spindelmitte gelagert.

Insgesamt ist die erfindungsgemässe Schwenkschiebetür im Vergleich zu bisher bekannten Schwenkschiebetüren sehr wartungsfreundlich und zeichnet sich durch eine kompakte Bauweise aus, da sie weder hydraulische noch pneumatische Antriebsmittel ausweist und keinerlei aufwendige Zusatzvorrichtungen zur Verriegelung der Tür oder für die Notöffnung der Tür benötigt.

Die nachfolgende detaillierte Beschreibung eines Ausführungsbeispiels der vorliegenden Erfindung dient in Verbindung mit den beiliegenden Zeichnungen nur als Beispiel für ein besseres Verständnis der Erfindung und ist nicht als Einschränkung des Schutzbereichs der vorliegenden Erfindung, wie sie in den Patentansprüchen definiert wird, aufzufassen. Für den Fachmann sind aus der nachfolgenden Beschreibung in Verbindung mit den beiliegenden Zeichnungen und der Gesamtheit der Patentansprüche weitere vorteilhafte Ausführungsformen und Merkmalskombinationen ohne weiteres erkennbar, die jedoch immer noch innerhalb des Bereichs der vorliegenden Erfindung liegen.

### Kurze Beschreibung der Zeichnungen

Die Zeichnungen stellen eine bevorzugte Ausführungsform der vorliegenden Erfindung dar. Es zeigt:
- Fig. 1: eine erfindungsgemässe Tür (in geschlossener Stellung) von innen;
- Fig. 2: die Tür aus Fig. 1 von der Seite;
- Fig. 3: eine teilweise geschnittene Ansicht der geschlossenen Tür aus Fig. 1 von oben;
- Fig. 4: gleiche Ansicht wie in Fig. 3 der Tür in geöffneter Stellung;

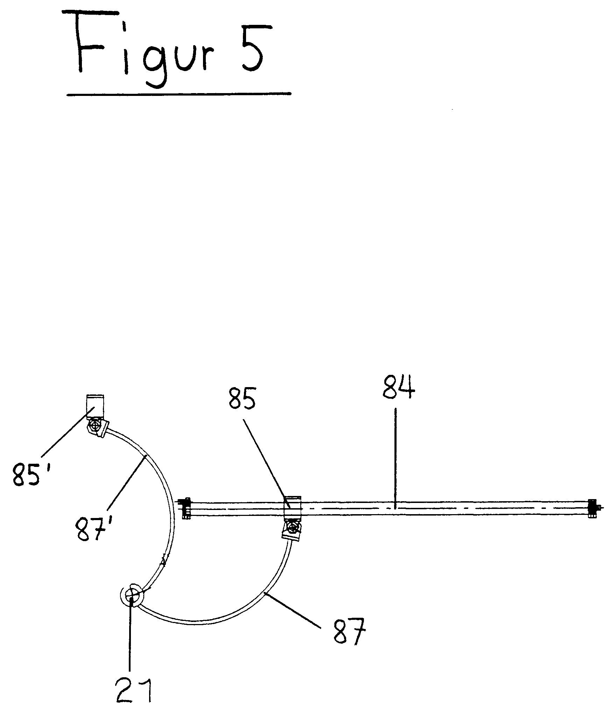

- Fig. 5: Detailansicht von oben auf Schwenkbügel für die Tür aus Fig. 1.

Grundsätzlich sind in den Figuren gleiche Teile mit gleichen Bezugszeichen versehen.

### Wege zur Ausführung der Erfindung

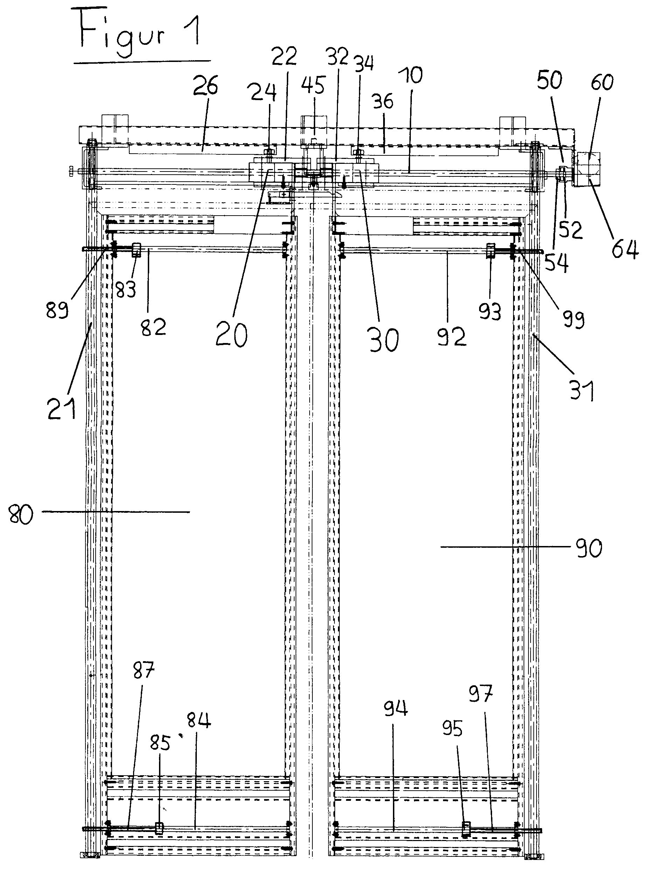

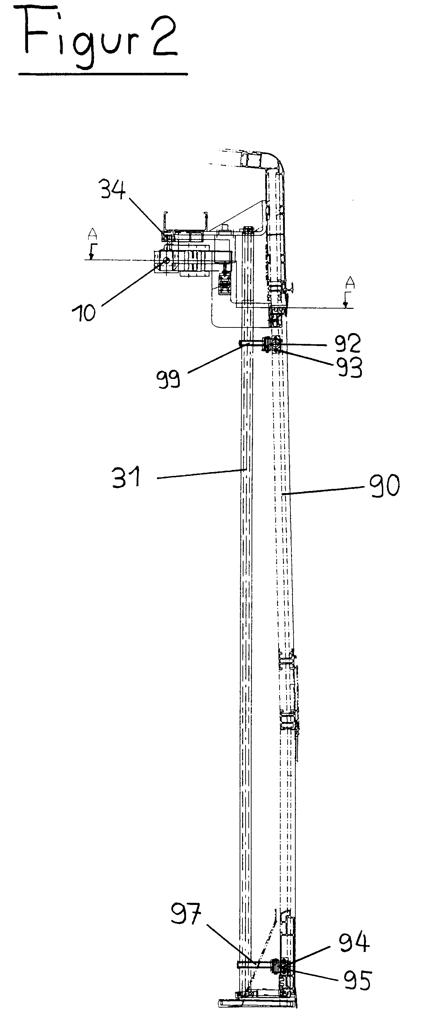

In Fig. 1 ist ein Ausführungsbeispiel einer erfindungsgemässen Schwenkschiebetür in einer Ansicht von innen (vom Innenraum eines Fahrzeuges aus) dargestellt und Fig. 2 zeigt diese Tür in einer Ansicht von der (in Bezug auf Fig. 1 rechten) Seite.

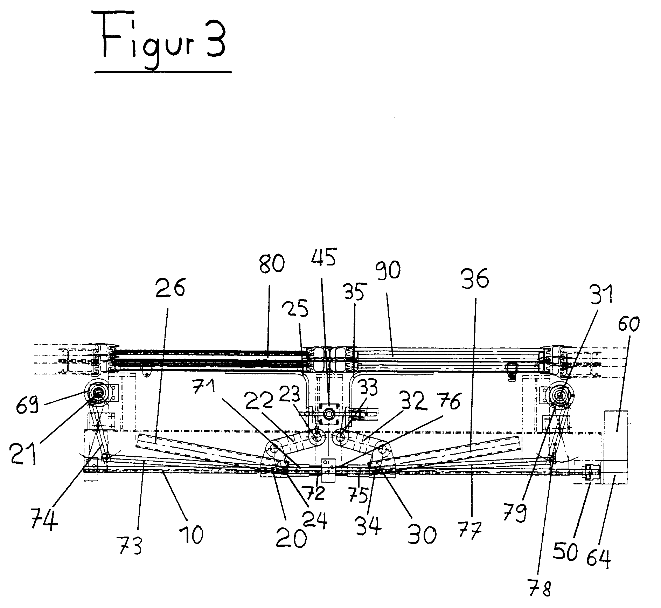

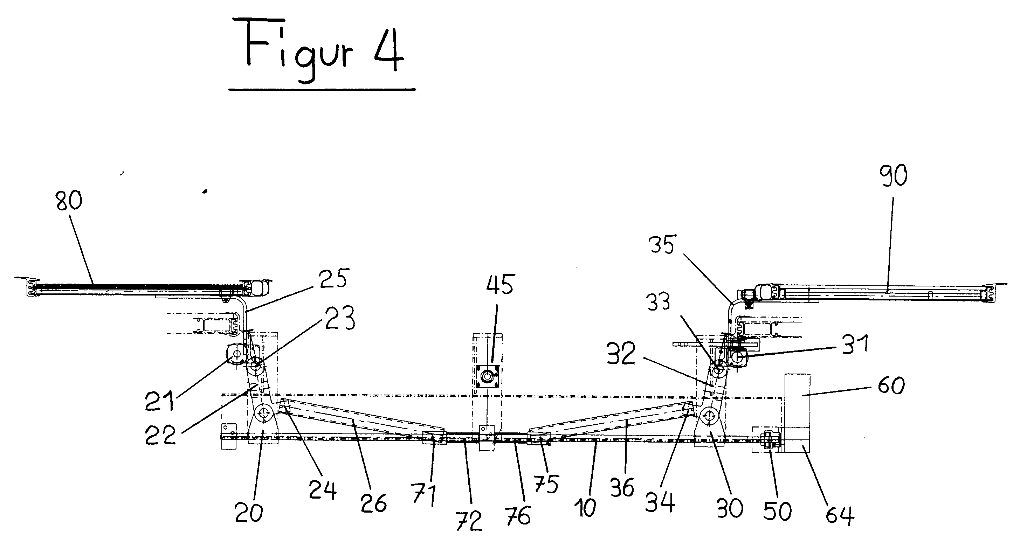

Die dargestellte Schwenkschiebetür hat zwei Türblätter 80; 90. Wie in Fig. 3 und 4 zu erkennen ist, ist jedes der Türblätter 80; 90 über Verbindungsmittel 25, 23, 22; 35, 33, 32 drehfest mit einem Mutterglied 20; 30 verbunden. Die beiden Mutterglieder 20; 30 sind nach Art eines Spindel-Mutter-Triebes durch eine Spindel 10 im wesentlichen horizontal entlang der Fahrzeugwand verschiebbar, welche die Türöffnung aufweist.

Die Gewindegänge der Spindel 10 sind auf beiden Spindelhälften gegenläufig ausgebildet sind, um die mit den Türblättern 80; 90 verbundenen Mutterglieder 20; 30 je entlang einer Spindelhälfte in entgegengesetzten Richtungen zu bewegen. Die Spindel 10 ist sowohl an beiden Spindelenden als auch in der Spindelmitte gelagert.

Die Spindel 10 wird durch Antriebsmittel 60, 64 zur Drehung angetrieben. Ein Elektromotor 60 treibt eine Schnecke eines Schneckengetriebes 64 an. Die Schnecke ihrerseits treibt ein Zahnrad des Schneckengetriebes 64 an, wobei dieses Zahnrad eine der Schnecke entsprechende Paarverzahnung aufweist. Wie allgemein bei Schneckengetrieben üblich, weist das Schneckengetriebe 64 in umgekehrter Antriebsrichtung, d.h. bei treibendem Zahnrad, eine Selbsthemmung auf. Bei der in den Figuren dargestellten Ausführungsform der Erfindung ist der Wirkungsgrad des Schneckengetriebes bei treibendem Zahnrad kleiner als null, was bedeutet, dass die Selbsthemmung des Schneckengetriebes 64 ein Antreiben der Schnecke durch das Zahnrad vollständig verhindert. Dadurch wird eine sichere Verriegelung der erfindungsgemässen Schwenkschiebetür in irgend einer beliebig wählbaren Stellung, insbesondere in geschlossener Stellung, gewährleistet. Sobald der Elektromotor 60 ausgeschaltet ist, blockiert die Schnecke das Zahnrad des Schneckengetriebes 64 und somit auch die über die Bogenzahnkupplung 50 drehfest mit dem Zahnrad des Schneckengetriebes 64 verbundene Spindel 10. Die Spindel 10 kann nicht mehr gedreht werden, wodurch die Mutterglieder 20; 30 auf der Spindel blockiert und somit die Türblätter 80; 90 verriegelt sind.

Zur Entriegelung der Tür in Notfällen ist eine mittels einer Notbetätigungsvorrichtung (nicht dargestellt) lösbare Kupplungsvorrichtung 50 zwischen der Spindel 10 und den Antriebsmitteln 60, 64 vorgesehen. Das Zahnrad des Schneckengetriebes 64 ist drehfest (z. B. über eine Welle) mit dem Taschenteil 52 einer Bogenzahnkupplung 50 verbunden. Das Nabenteil 54 der Bogenzahnkupplung 50 ist drehfest mit der Spindel 10 verbunden. Das Taschenteil 52 weist eine Innenverzahnung auf, die mit einer Aussenverzahnung des Nabenteils 54 zusammenwirkt. Durch eine Notbetätigungsvorrichtung (nicht dargestellt) kann das Taschenteil 52 in axialer Richtung von Nabenteil 54 weg verschoben werden, so dass das Taschenteil 52 vom Nabenteil 54 und somit die Antriebsmittel 60, 64 von der Spindel 10 entkuppelt werden, indem die Wirkverbindung zwischen dem Taschenteil 52 und dem Nabenteil 54 gelöst wird.

Anstelle der Bogenzahnkupplung 50 kann auch eine andere geeignete Kupplung verwendet werden, durch welche im Notfall die Wirkverbindung zwischen der Spindel 10 und den Antriebsmitteln 60, 64 gelöst werden kann. Die Bogenzahnkupplung 50 weist allerdings den Vorteil auf, dass sie winklige Verlagerungen und Verschiebungen zwischen den gekuppelten Teilen bis zu einem gewissen Grad auszugleichen vermag und eine gewisse Verschwenkbarkeit zwischen den gekuppelten Teilen zulässt.

Das Gewinde weist auf beiden Hälften der Spindel 10 je einen grossen Steigungswinkel auf, damit die Mutterglieder 20; 30 auf der von den Antriebsmitteln 60, 64 entkuppelten Spindel 10 mit kleiner Kraft verschoben werden können. Dies ermöglicht ein zum Öffnen der Tür von Hand erforderliches Verschieben der mit den Muttergliedern 20; 30 verbundenen Türblätter 80; 90. Dadurch kann in Notfällen die Tür geöffnet werden, indem zunächst durch Betätigung der Notbetätigungsvorrichtung die Spindel 10 von den Antriebsmitteln 60, 64 entkuppelt und somit die Tür entriegelt wird, und anschliessend die entriegelten Türblätter 80; 90 von Hand zur Seite geschoben werden.

Der Steigungswinkel des Spindelgewindes auf beiden Hälften der Spindel 10 beträgt bei der in den Figuren dargestellten Ausführungsform der Erfindung ungefähr 65 Grad. Dadurch wird ein leichtes Verschieben der mit den Türblättern 80; 90 verbundenen Mutterglieder 20; 30 auf der von den Antriebsmitteln 60, 64 entkuppelten Spindel 10 und somit ein händiges Öffnen der Tür mit keinem Kraftaufwand in Notfällen ermöglicht.

Zur Führung der Türblätter 80; 90 quer zur Fahrzeugwand ist jedes der beiden Türblätter 80; 90 in seinem oberen Bereich in der Nähe der Hauptschliesskante je an einem Verbindungsblech 25; 35 befestigt. Die Hauptschliesskanten der Türblätter befindet sich bei der dargestellten zweiblättrigen Tür in deren Mitte, wo in geschlossener Stellung die Hauptschliesskanten der beiden Türblätter aneinanderstossen. Die Verbindungsbleche 25; 35 sind andrerseits mittels Drehgelenken 23; 33, die um im wesentlichen vertikale Drehachsen schwenkbar sind, gelenkig an einem Schenkel der Winkelhebel 22; 32 befestigt. Am anderen Schenkel weisen die Winkelhebel 22; 32 eine Führungsrolle 23; 33 auf, die je in eine mit dem Fahrzeugrahmen fest verbundene, im wesentlichen gerade Führungsschiene 26; 36 eingreifen. Die Winkelhebel 22; 32 sind im Bereich des Hebelwinkels je um eine im wesentlichen vertikale Achse schwenkbar an den Muttergliedern 20; 30 angebracht. Durch die Führungs- und Verbindungsvorrichtung 22, 23, 24, 25, 26; 32, 33, 34, 35, 36 wird die Querbewegung der Türblätter 80; 90 mit ihrer Längsbewegung gekoppelt, wobei die Führungshebel 22; 32 und die Führungsschienen 26; 36 derart angeordnet sind, dass die Kopplung im wesentlichen während des gesamten Bewegungsablaufs beim Öffnen bzw. beim Schliessen der Tür erfolgt. Damit wird ein abrupter, ruckartiger Übergang von einer Schwenkbewegung der Türblätter 80; 90 im wesentlichen quer zur Fahrzeugwand zu einer Verschiebungsbewegung im wesentlichen längs zur Fahrzeugwand vermieden, weil die Längsbewegung und die Querbewegung der Türblätter 80; 90 im wesentlichen gleichzeitig ausgeführt werden.

Zur Führung und Halterung der Türblätter 80; 90 sind diese weiter im Bereich der Nebenschliesskante (auf der anderen Seite der Türblätter als die Hauptschliesskante) mittels weiterer Führungs- und Verbindungsmitteln je an einem um eine vertikale Achse drehbar am Fahrzeugrahmen gelagerten Türbaum 21; 31 angebracht. Dazu sind an jedem Türbaum 21; 31 je ein oberer und ein unterer bogenförmig gekrümmter Schwenkbügel 89, 87; 99, 97 befestigt. An den Schwenkbügel 89, 87; 99, 97 ist je eine Kugelhülse 83, 85; 93, 95 gelenkig angeordnet. Jede dieser Kugelhülsen 83, 85; 93, 95 wirkt mit je einer auf entsprechender Höhe im wesentlichen horizontal am Türblatt 80; 90 befestigten Welle 82, 84; 92, 94 zusammen, indem sie nach Art einer Längsführung auf der entsprechenden Welle geführt wird. Somit wird jedes der Türblätter 80; 90 einerseits durch zwei Längsführungen, bestehend aus Welle 82, 84; 92, 94 und Kugelhülse 83, 85; 93, 95, sowie andrerseits die Verbindungsmittel 22, 23, 24, 25, 26; 32, 33, 34, 35, 36 zwischen Türblatt 80; 90 und Mutterglied 20; 30 an insgesamt drei Punkten geführt und gehalten.

Zur Erleichterung des Öffnens der Tür von Hand in Notfällen weist die Schwenkschiebetür gemäss der dargestellten Ausführungsform der Erfindung eine Hilfsöffnungsvorrichtung auf, welche nach Betätigung der Notbetätigungsvorrichtung (nicht dargestellt) die Tür selbsttätig mittels Federkraft zumindest soweit öffnet, dass die Türblätter anschliessend von Hand um eine seitliche Türblattkante herum greifbar sind. Dazu werden auf der Spindel 10 zwischen den Muttergliedern 20; 30 und der Spindelmitte je ein Mitnehmer 71; 75 ohne Gewinde auf der Spindel geführt. Die Mitnehmer 71; 75 werden beim Schliessen der Tür von den Muttergliedern 20; 30 am Ende des Schliessvorgangs gegen zwei zwischen den Mitnehmern 71; 75 und der Spindelmitte angeordnete Druckfedern 72; 76 geführt, so dass sie diese zusammendrücken. Bei Öffnen der Tür werden die Mitnehmer 71; 75 am Anfang des Öffnungsvorgangs durch die Druckfedern 72; 76 mitgeführt, bis diese entspannt sind. Die Mitnehmer 71; 75 wirken je auf eine Schubstange 73; 77, welche je gelenkig mit einem Umlenkhebel 74; 78 verbunden sind und diesen betätigen. Die Umlenkhebel sind ungefähr in ihrer Mitte um ein Drehgelenk schwenkbar und betätigen je eine fest an den Türbäumen 21; 31 angebrachte Scheibe 69; 79, mit der sie an Ihrem der Verbindungsstelle mit den Schubstangen 73; 77 gegenüberliegenden Enden gelenkig verbunden sind. Beim Öffnen der Tür wirken die Umlenkhebel 74; 78 so auf die Scheiben 69; 79 und die mit ihnen verbunden Türbäume 21; 31, dass diese die Türblätter 80; 90 nach aussen schwenken.

Insgesamt wird durch die Anordnung des Gestänges 73, 74; 77, 78 die Federkraft der Druckfeder 72; 76 so auf den Türbaum 21; 31 übertragen, dass dieser nach einer Lösung der Kupplung 50 zwischen den Antriebsmitteln 60, 64 und der Spindel 10 im Anschluss an die Betätigung der Notbetätigungsvorrichtung das Türblatt 80; 90 selbsttätig nach aussen schwenkt. Danach können die Türblätter 80; 90 von Hand um ihre Hauptschliesskante herum ergriffen werden und aufgrund der grossen Steigung des Spindelgewindes mit keinem Kraftaufwand zu Seite geschoben werden.

Die Schwenkschiebetür gemäss der dargestellten Ausführungsform der Erfindung weist zusätzlich eine mit einem Hubmagnet betätigbare Verriegelungsvorrichtung 45 auf, um die Tür in ihrer geschlossenen Stellung zusätzlich zu der durch das Schneckengetriebe gewährleisteten Verriegelung zu verriegeln.

Bei der in den Zeichnungen dargestellten Ausführungsform der Erfindung steht die geöffnete Tür bloss ungefähr 90 mm von der Karosserie vor, was einen weiteren Vorteil der erfindungsgemässen Schwenkschiebetür im Vergleich zu den bekannten Schwenkschiebetüren darstellt, die in der Regel 120 und mehr mm von der Karosserie vorstehen.

Zusammenfassend ist festzustellen, dass durch die Erfindung eine Schwenkschiebetür bereit gestellt wird, die im Vergleich zu den bisher bekannten Schwenkschiebetüren sehr wartungsfreundlich ist und sich durch eine kompakte Bauweise auszeichnet, da sie weder hydraulische noch pneumatische Antriebsmittel aufweist und keinerlei aufwendige Zusatzvorrichtungen zur Verriegelung der Tür oder für die Notöffnung der Tür benötigt.

## Patentansprüche

1. Schwenkschiebetür, insbesondere für Fahrzeuge, mit einem Türblatt (80; 90), das mittels Verbindungsmitteln mit einem Mutterglied (20; 30) drehfest verbunden ist, wobei das Mutterglied (20; 30) nach Art eines Spindel-Mutter-Triebes durch eine Spindel (10) im wesentlichen horizontal entlang einer die Türöffnung aufweisenden Fahrzeugwand verschiebbar ist, dadurch gekennzeichnet, dass die Spindel (10) durch Antriebsmittel (60, 64) zur Drehung antreibbar ist, die eine Selbsthemmung aufweisen, derart dass eine sichere Verriegelung der Tür in geschlossener Stellung gewährleistet ist.

2. Schwenkschiebetür nach Anspruch 1, dadurch gekennzeichnet, dass die Antriebsmittel (60, 64) einen Elektromotor (60) aufweisen und ein Schneckengetriebe (64), über welches die Spindel (10) durch den Elektromotor (60) zur Drehung antreibbar ist.

3. Schwenkschiebetür insbesondere nach einem der Ansprüche 1 oder 2, dadurch gekennzeichnet, dass zur Entriegelung der Tür in Notfällen eine mittels einer Notbetätigungsvorrichtung lösbare Kupplungsvorrichtung (50) zwischen der Spindel (10) und den Antriebsmitteln (60, 64) vorgesehen ist und das Spindelgewinde einen Steigungswinkel aufweist, der ein zum Öffnen der Tür von Hand erforderliches Verschieben des mit dem Türblatt (80; 90) verbundenen Muttergliedes (80; 90) auf der von den Antriebsmitteln (60, 64) entkuppelten Spindel (10) ermöglicht.

4. Schwenkschiebetür nach Anspruch 3, dadurch gekennzeichnet, dass die Kupplungsvorrichtung eine Bogenzahnkupplung (50) mit einem eine Innenverzahnung aufweisenden Taschenteil (52) und einem eine mit der Innenverzahnung des Taschenteils (52) zusammenwirkende Aussenverzahnung aufweisenden Nabenteil (54) umfasst, wobei ein Teil (54) des aus dem Taschenteil (52) und dem Nabenteil (54) bestehenden Teilepaares drehfest mit der Spindel (10) verbunden ist und das andere Teil (52) des Teilepaares drehfest mit den Antriebsmitteln (60, 64) verbunden ist und die Wirkverbindung zwischen dem Taschenteil (52) und dem Nabenteil (54) lösbar ist.

5. Schwenkschiebetür nach einem der Ansprüche 3 oder 4, dadurch gekennzeichnet, dass der Steigungswinkel des Spindelgewindes grösser als 45 Grad ist.

6. Schwenkschiebetür nach Anspruch 5, dadurch gekennzeichnet, dass der Steigungswinkel des Spindelgewindes grösser als 60 Grad ist.

7. Schwenkschiebetür nach einem der Ansprüche 1 bis 6, dadurch gekennzeichnet, dass zur Erleichterung des Öffnens der Tür von Hand in Notfällen eine Hilfsöffnungsvorrichtung (71, 72, 73, 74, 69; 75, 86, 77, 78, 79) vorgesehen ist, welche nach Betätigung der Notbetätigungsvorrichtung die Tür selbsttätig mittels Federkraft zumindest soweit öffnet, dass das Türblatt (80; 90) anschliessend von Hand um eine seitliche Türblattkante herum greifbar ist.

8. Schwenkschiebetür insbesondere nach einem der Ansprüche 1 bis 7, dadurch gekennzeichnet, dass die Verbindungsmittel zur Führung des Türblattes (80; 90) quer zur Fahrzeugwand einen Hebel (22; 32) umfassen, der mit einer Führungsrolle (24; 34) in eine mit dem Fahrzeugrahmen fest verbundene, im wesentlichen gerade Führungsschiene (26; 36) eingreift, um die Querbewegung des Türblattes (80; 90) mit seiner Längsbewegung zu koppeln.

9. Schwenkschiebetür nach einem der Ansprüche 1 bis 8, dadurch gekennzeichnet, dass eine Verriegelungsvorrichtung (45) zur zusätzlichen Verriegelung der Tür einen Hubmagnet aufweist.

10. Schwenkschiebetür nach einem der Ansprüche 1 bis 9, dadurch gekennzeichnet, dass sie zur Führung des Türblattes (80; 90) weiter zwei an einem um eine vertikale Achse drehbar am Fahrzeugrahmen gelagerten Türbaum (21; 31) angebrachte Schwenkbügel (87, 89; 97, 99) aufweist, an denen je eine Kugelhülse (85, 83; 95, 93) gelenkig angeordnet ist, welche mit je einer im wesentlichen horizontal am Türblatt (80; 90) befestigten Welle (84, 82; 94, 92) nach Art einer Längsführung zusammenwirkt.

11. Schwenkschiebetür nach einem der Ansprüche 1 bis 10, dadurch gekennzeichnet, dass sie zwei Türblätter (80; 90) aufweist und eine einzige Spindel (10), deren Gewindegänge auf beiden Spindelhälften gegenläufig ausgebildet sind, um die mit den Türblättern (80; 90) verbundenen Mutterglieder (20; 30) je entlang einer Spindelhälfte entgegengesetzt zu bewegen.

12. Strassenfahrzeug zur Personenbeförderung mit einer Schwenkschiebetür nach einem der Ansprüche 1 bis 11.
